# FASCICULE DE BREVET EUROPEEN

(11) **EP 2 486 312 B1**
(45) Date de publication et mention de la délivrance du brevet: **06.11.2013**
(21) Numéro de dépôt: 10769013.3
(22) Date de dépôt: 22.09.2010
(51) Int. Cl.: F16K 17/38, F17C 13/06, F17C 13/12

(54) **DISPOSITIF DE SÉCURITÉ ET RÉCIPIENT POURVU D'UN TEL DISPOSITIF**
SICHERHEITSVORRICHTUNG UND BEHÄLTER MIT DIESER VORRICHTUNG
SECURITY DEVICE AND CONTAINER PROVIDED WITH SUCH DEVICE

(30) Priorité: 09.10.2009 FR 0957068
(43) Date de publication de la demande: 15.08.2012
(73) Titulaire: L'Air Liquide Société Anonyme pour l'Etude et l'Exploitation des Procédés Georges Claude, 75007 Paris (FR)
(72) Inventeur: JALLAIS, Simon, 92370 Chaville (FR); HOUSSIN, Déborah, 91490 Milly-la-foret (FR)
(74) Mandataire: De Cuenca, Emmanuel Jaime
(86) Numéro de dépôt international: PCT/FR2010/051977
(87) Numéro de publication internationale: WO 2011/042635

(56) Documents cités:
- FR-A- 1 148 511
- GB-A- 2 286 804
- US-B1- 6 866 057

## Description

La présente invention concerne un dispositif de sécurité et un récipient pourvu d'un tel dispositif.

L'invention concerne plus particulièrement un dispositif de sécurité formant une soupape de libération d'un gaz sous pression en cas de situation dangereuse, comprenant un corps définissant un canal d'écoulement de gaz s'étendant entre une première extrémité amont destinée à être mise en contact avec une source de gaz sous pression et une seconde extrémité aval destinée à être mis en contact avec l'atmosphère extérieure, le dispositif comprenant un bouchon situé sur le canal pour empêcher l'écoulement du gaz entre l'extrémité amont et l'extrémité aval en situation normale, le bouchon étant fusible et/ou frangible pour libérer le passage pour le gaz en cas de situation dangereuse lors d'une pression et/ou une température excédant un seuil déterminé, voir par exemple FR-A-1148511 ou US-A-6866057.

Les bouteilles de gaz inflammable, en particulier pour les applications mobiles de l'hydrogène énergie, sont équipées d'un dispositif permettant de vider le contenu gazeux de la bouteille si celle-ci est prise dans un feu pour éviter ainsi son éclatement. Ceci concerne en particulier les bouteilles composites de type IV.

Un tel dispositif comprend souvent un fusible thermique, c'est-à-dire un eutectique métallique qui doit fondre sous l'action de la température du feu afin de créer une fuite qui vide la bouteille et évite ainsi son éclatement.

Dans de nombreux cas d'incendie, lorsque le fusible libère le gaz (hydrogène notamment), le gaz s'enflamme et crée une flamme de longueur plus ou moins grande selon les caractéristiques de pression du gaz et selon la géométrie de l'orifice d'évacuation.

L'ouverture du fusible permet bien l'évacuation du gaz à risque. Toutefois, dans certaines conditions, le gaz ne s'enflamme pas spontanément. Le gaz libéré peut ainsi se mélanger à l'air ambiant et former un nuage inflammable de volume relativement important dont l'explosion (ou même la détonation) peut se révéler désastreuse, en particulier dans des configurations confinées et obstruées (typiquement dans un parking souterrain ou un tunnel).

Il est cependant souvent préférable de former une flamme (même de grande longueur) car les effets associés (rayonnement) sont jugés plus réduits que ceux d'une explosion d'un nuage de gaz.

Une solution connue consiste à choisir une géométrie d'orifice d'évacuation du gaz qui favorise l'inflammation spontanée de ce dernier.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le dispositif comprend une réserve de gaz instable à décomposition exothermique qui est mis en communication avec le gaz sous pression libéré lors de la fusion/rupture du bouchon.

Par ailleurs, des modes de réalisation de l'invention peuvent comporter l'une ou plusieurs des caractéristiques suivantes :
- la réserve de gaz instable est contenue dans un volume étanche situé dans le canal d'écoulement ou situé dans une portion adjacente au canal et sélectivement en communication avec ledit canal d'écoulement,
- la réserve de gaz instable est en contact fluidique avec le bouchon,
- la réserve de gaz instable est contenue dans un volume étanche refermée par un disque de rupture étanche,
- la réserve de gaz instable est contenue dans un volume étanche du canal entre d'une part le bouchon et, d'autre part, un disque de rupture étanche en communication avec l'extérieur,
- le gaz instable de la réserve comprend au moins l'un parmi : de l'acétylène (C₂H₂), du protoxyde d'azote (N₂O), du trichlorure d'azote (NCl₃) ; de l'oxyde d'éthylène (C₂H₄O), de l'azoture d'hydrogène (N₃H), de l'azoture de chlore (N₃Cl), de l'oxyde de chlore (Cl₂O ou ClO₂) de l'hydrazine (N₂H₄), de l'ozone (O₃),
- la réserve contient une quantité de gaz instable comprise entre 0.1 cm3 et 1 litre,
- le gaz instable de la réserve est à une pression comprise entre 0,1 et 700 bar et de préférence entre 1 et 15 bar et encore plus préférentiellement entre 1 et 5 bar.

L'invention concerne également un récipient de gaz sous pression comprenant un dispositif selon l'une quelconque des caractéristiques ci-dessus ou ci-dessous.

L'invention peut concerner également tout dispositif ou procédé alternatif comprenant toute combinaison des caractéristiques ci-dessus ou ci-dessous.

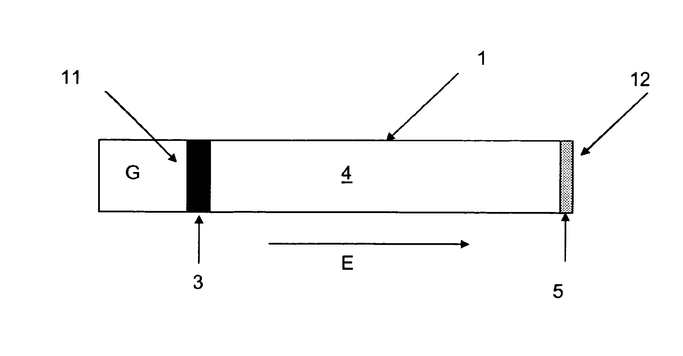

D'autres particularités et avantages apparaîtront à la lecture de la description ci-après, faite en référence à la figure unique qui représente, de façon schématique et partielle un exemple de structure et de fonctionnement d'un dispositif selon l'invention.

Le dispositif de sécurité comprend un corps définissant un canal 1 d'écoulement E de gaz s'étendant entre une première extrémité amont 11 destinée à être mise en contact avec une source de gaz G sous pression et une seconde extrémité aval 12 destinée à être mis en contact avec l'atmosphère extérieure.

Le canal 1 est par exemple cylindrique.

Un bouchon 3 fusible est disposé sur le canal 1 pour empêcher l'écoulement du gaz entre l'extrémité amont 11 et l'extrémité aval 12 en situation normale. Le bouchon 3 est classiquement fusible et/ou frangible pour libérer le passage pour le gaz en cas de situation dangereuse lorsqu'il est soumis à un pression et/ou une température excédant un seuil déterminé.

Selon une particularité avantageuse, le dispositif comprend une réserve 4 de gaz instable et à décomposition exothermique. Le gaz instable de la réserve 4 est mis en communication avec le gaz G sous pression libéré lors de la fusion/rupture du bouchon 3.

Par exemple, la réserve 4 de gaz instable est contenue dans un volume étanche du canal 1 entre d'une part le bouchon 3 et, d'autre part, un disque 5 de rupture étanche en communication avec l'extérieur.

De préférence, le gaz instable est un gaz pur susceptible de se décomposer de façon exothermique en l'absence d'air ou d'un gaz comburant. Ce gaz instable a la propriété de dégager une forte chaleur et une température élevée lorsqu'il est soumis à un amorçage tel que qu'une onde de choc incidente de détente du gaz G libéré.

Le gaz instable est par exemple de l'acétylène (C₂H₂). Bien entendu, le gaz instable peut être constitué de tout autre gaz ou mélange parmi notamment : du protoxyde d'azote (N₂O), du trichlorure d'azote (NCl₃) ; de l'oxyde d'éthylène (C₂H₄O), de l'azoture d'hydrogène (N₃H), de l'azoture de chlore (N₃Cl), de l'oxyde de chlore (Cl₂O ou ClO₂) de l'hydrazine (N₂H₄), de l'ozone (O₃). Il est entendu que cette liste ne saurait être exhaustive.

L'instabilité de la réserve 4 de gaz instable pourra également être favorisée par l'un au moins des paramètres suivants : la concentration du gaz instable, la pression du gaz instable, la température du gaz instable, le matériau de l'enceinte qui contient ce gaz instable

L'invention permet ainsi de créer une flamme lors de la vidange de gaz (par exemple de l'hydrogène) par décomposition d'un gaz instable.

En considérant l'utilisation de l'acétylène comme gaz instable, lors de la fusion du bouchon 3, l'hydrogène se détend dans le compartiment contenant l'acétylène. Cette libération est accompagnée d'une onde de choc derrière laquelle la température s'élève par exemple au-dessus de 1000 K. A cette température et sous l'effet de la pression locale, l'acétylène se décompose de façon très exothermique. La chaleur de la décomposition est expulsée après rupture du disque 5 vers l'extérieur et enflamme l'hydrogène rejeté.

On constate que, tout en étant de structure simple et peu coûteuse, l'invention permet d'améliorer les conditions de sécurité de libération d'un gaz inflammable.

L'invention s'applique avantageusement aux réservoirs composites de type IV. Bien entendu, l'invention peut s'appliquer avantageusement également aux réservoirs de type III et même aux réservoirs de type I et II.

## Revendications

1. Dispositif de sécurité formant une soupape de libération d'un gaz sous pression en cas de situation dangereuse, comprenant un corps définissant un canal (1) d'écoulement de gaz s'étendant entre une première extrémité amont (11) destinée à être mise en contact avec une source de gaz (G) sous pression et une seconde extrémité aval (12) destinée à être mis en contact avec l'atmosphère extérieure, le dispositif comprenant un bouchon (3) situé sur le canal (1) pour empêcher l'écoulement du gaz entre l'extrémité amont (11) et l'extrémité aval (12) en situation normale, le bouchon (3) étant fusible et/ou frangible pour libérer le passage pour le gaz en cas de situation dangereuse lors d'une pression et/ou une température excédant un seuil déterminé, **caractérisé en ce que** le dispositif comprend une réserve (4) de gaz instable à décomposition exothermique qui est mis en communication avec le gaz (G) sous pression libéré lors de la fusion/rupture du bouchon (3).

2. Dispositif selon la revendication 1, **caractérisé en ce que** la réserve (4) de gaz instable est contenue dans un volume étanche situé dans le canal (1) d'écoulement ou situé dans une portion adjacente au canal et sélectivement en communication avec ledit canal (1) d'écoulement.

3. Dispositif selon l'une quelconque des revendications 1 ou 2, **caractérisé en ce que** la réserve (4) de gaz instable est en contact fluidique avec le bouchon (3).

4. Dispositif selon l'une quelconque des revendications 1 à 3, **caractérisé en ce que** la réserve (4) de gaz instable est contenue dans un volume étanche refermée par un disque (5) de rupture étanche.

5. Dispositif selon l'une quelconque des revendications 1 à 4, **caractérisé en ce que** la réserve (4) de gaz instable est contenue dans un volume étanche du canal (1) entre d'une part le bouchon (3) et, d'autre part, un disque (5) de rupture étanche en communication avec l'extérieur.

6. Dispositif selon l'une quelconque des revendications 1 à 5, **caractérisé en ce que** le gaz instable de la réserve (4) comprend au moins l'un parmi : de l'acétylène (C₂H₂), du protoxyde d'azote (N₂O), du trichlorure d'azote (NCl₃) ; de l'oxyde d'éthylène (C₂H₄O), de l'azoture d'hydrogène (N₃H), de l'azoture de chlore (N₃Cl), de l'oxyde de chlore (Cl₂O ou ClO₂) de l'hydrazine (N₂H₄), de l'ozone (O₃).

7. Dispositif selon l'une quelconque des revendications 1 à 6, **caractérisé en ce que** la réserve (4) contient une quantité de gaz instable comprise entre 0.1 cm3 et 1 litre.

8. Dispositif selon l'une quelconque des revendications 1 à 7, **caractérisé en ce que** le gaz instable de la réserve (4) est à une pression comprise entre 0,1 et 700 bar et de préférence entre 1 et 15 bar et encore plus préférentiellement entre 1 et 5 bar.

9. Récipient de gaz sous pression, notamment de gaz inflammable contenant de l'hydrogène, **caractérisé en ce qu'**il comporte au moins un dispositif de sécurité conforme à l'une quelconque des revendications 1 à 8.

## Patentansprüche

1. Sicherheitseinrichtung, die ein Ventil zur Freigabe eines Druckgases im Falle einer gefährlichen Situation bildet, umfassend einen Körper, der einen Kanal (1) zur Gasabgabe definiert, der sich zwischen einem ersten stromaufwärtigen Ende (11), das dazu bestimmt ist, mit einer Druckgasquelle (G) in Kontakt zu kommen, und einem zweiten stromabwärtigen Ende (12), das dazu bestimmt ist, mit der äußeren Atmosphäre in Kontakt zu kommen, erstreckt, wobei die Einrichtung einen Stöpsel (3) umfasst, der sich auf dem Kanal (1) befindet, um die Abgabe des Gases zwischen dem stromaufwärtigen Ende (11) und dem stromabwärtigen Ende (12) in einer normalen Situation zu verhindern, wobei der Stöpsel (3) schmelzbar und/oder zerbrechlich ist, um den Durchgang für das Gas im Falle einer gefährlichen Situation bei einem Druck und/oder einer Temperatur, die eine bestimmte Schwelle überschreiten, freizugeben, **dadurch gekennzeichnet, dass** die Vorrichtung eine instabile Gasreserve (4) mit exothermer Dissoziation umfasst, die mit dem Druckgas (G), das beim Schmelzen und/oder Zerbrechen des Stöpsels (3) freigesetzt wird, in Verbindung gebracht wird.

2. Einrichtung nach Anspruch 1, **dadurch gekennzeichnet, dass** die instabile Gasreserve in einem dichten Volumen enthalten ist, das sich in dem Abgabekanal (1) oder in einem an den Kanal angrenzenden Abschnitt, der selektiv mit dem Abgabekanal (1) in Verbindung steht, befindet.

3. Einrichtung nach einem der Ansprüche 1 oder 2, **dadurch gekennzeichnet, dass** die instabile Gasreserve (4) mit dem Stöpsel (3) in Fluidverbindung steht.

4. Einrichtung nach einem der Ansprüche 1 bis 3, **dadurch gekennzeichnet, dass** die instabile Gasreserve (4) in einem dichten Volumen enthalten ist, das von einer dichten Bruchscheibe (5) verschlossen ist.

5. Einrichtung nach einem der Ansprüche 1 bis 4, **dadurch gekennzeichnet, dass** die instabile Gasreserve (4) in einem dichten Volumen des Kanals (1) zwischen einerseits dem Stöpsel (3) und andererseits einer dichten Bruchscheibe (5), die mit dem Außenbereich in Verbindung steht, enthalten ist.

6. Einrichtung nach einem der Ansprüche 1 bis 5, **dadurch gekennzeichnet, dass** das instabile Gas der Reserve (4) mindestens eines der folgenden umfasst: Azetylen (C₂H₂), Stickstoffprotoxid (N₂O), Stickstofftrichlorid (NCl₃) ; Äthylenoxid (C₂H₄O), Wasserstoffnitrid (N₃H), Chlornitrid (N₃Cl), Chloroxid (Cl₂O oder ClO₂), Hydrazin (N₂H₄), Ozon (O₃) .

7. Einrichtung nach einem der Ansprüche 1 bis 6, **dadurch gekennzeichnet, dass** die Reserve (4) eine Menge an instabilem Gas zwischen 0,1 cm³ und 1 Liter umfasst.

8. Einrichtung nach einem der Ansprüche 1 bis 7, **dadurch gekennzeichnet, dass** das instabile Gas der Reserve (4) unter einem Druck zwischen 0,1 und 700 bar und vorzugsweise zwischen 1 und 15 bar und ferner vorzugsweise zwischen 1 und 5 bar steht.

9. Druckgasbehälter, insbesondere für ein entflammbares Gas, das Wasserstoff enthält, **dadurch gekennzeichnet, dass** er mindestens eine Sicherheitseinrichtung nach einem der Ansprüche 1 bis 8 umfasst.

## Claims

1. Safety device forming a valve for releasing a pressurised gas in the event of a hazardous situation, comprising a body defining a gas flow channel (1) which extends between an upstream first end (11), intended to be brought into contact with a source of pressurised gas (G), and a downstream second end (12), intended to be brought into contact with the external atmosphere, the device comprising a plug (3) located on the channel (1) to prevent the gas from flowing between the upstream end (11) and the downstream end (12) under normal circumstances, the plug (3) being meltable and/or frangible so as to clear the passage for the gas in the event of a hazardous situation in which a pressure and/or a temperature exceed a determined threshold, **characterised in that** the device comprises a reserve (4) of an unstable, exothermically decomposable gas which is brought into communication with the pressurised gas (G) released when the plug (3) melts/ruptures.

2. Device according to claim 1, **characterised in that** the unstable gas reserve (4) is contained in a sealed volume located in the flow channel (1) or located in a portion adjacent to the channel and selectively in communication with said flow channel (1).

3. Device according to either claim 1 or claim 2, **characterised in that** the unstable gas reserve (4) is in fluidic contact with the plug (3).

4. Device according to any of claims 1 to 3, **characterised in that** the unstable gas reserve (4) is contained in a sealed volume closed off by an impervious rupture disc (5).

5. Device according to any of claims 1 to 4, **characterised in that** the unstable gas reserve (4) is contained in a sealed volume of the channel (1) between the plug (3) and an impermeable rupture disc (5) in communication with the exterior.

6. Device according to any of claims 1 to 5, **characterised in that** the unstable gas of the reserve (4) comprises at least one of: acetylene (C₂H₂), nitrous oxide (N₂O), nitrogen trichloride (NCl₃), ethylene oxide (C₂H₄O), hydrogen azide (N₃H), chlorine azide (N₃Cl), chlorine oxide (Cl₂O or ClO₂), hydrazine (N₂H₄) or ozone (O₃).

7. Device according to any of claims 1 to 6, **characterised in that** the reserve (4) contains an amount of unstable gas of between 0.1 cm³ and 1 litre.

8. Device according to any of claims 1 to 7, **characterised in that** the unstable gas of the reserve (4) is at a pressure of between 0.1 and 700 bar, preferably between 1 and 15 bar and more preferably between 1 and 5 bar.

9. Container for pressurised gas, in particular inflammable hydrogencontaining gas, **characterised in that** it comprises at least one security device in accordance with any of claims 1 to 8.
